# FASCICULE DE BREVET EUROPEEN

(11) **EP 0 982 368 B1**
(45) Date de publication et mention de la délivrance du brevet: **17.09.2003**
(21) Numéro de dépôt: 99401910.7
(22) Date de dépôt: 27.07.1999
(51) Int. Cl.: C08L 67/02, C08L 77/00

(54) **Compositions thermoplastiques comprenant une phase réticulée**
Thermoplastische Zusammensetzungen die eine vernetze Phase enthalten
Thermoplastic compositions containing a cross-linked phase

(30) Priorité: 27.08.1998 FR 9810895
(43) Date de publication de la demande: 01.03.2000
(73) Titulaire: Atofina, 92800 Puteaux (FR)
(72) Inventeur: Bouilloux, Alain, 27300 Bernay (FR); Teze, Laurent, 75116 Paris (FR)
(74) Mandataire: Neel, Henry

(56) Documents cités:
- EP-A- 0 382 539
- EP-A- 0 400 890
- WO-A-89/05838
- US-A- 5 777 033
- PATENT ABSTRACTS OF JAPAN vol. 015, no. 206 (C-0835), 27 mai 1991 (1991-05-27) & JP 03 059072 A (UNITIKA LTD), 14 mars 1991 (1991-03-14)

## Description

La présente invention concerne des compositions thermoplastiques comprenant une phase réticulée.

Les polymères thermoplastiques tels que par exemple les polyamides ou les polyesters saturés (PET et PBT) doivent être modifiés soit pour pouvoir résister aux chocs, en particulier à basse température, soit pour modifier leur module de flexion. Cette modification consiste à incorporer des polyoléfines ou des caoutchoucs dans lesdits thermoplastiques. Quand on incorpore des polyoléfines dans ces thermoplastiques il est utile que ces polyoléfines soient réticulées. Cette réticulation est utile pour obtenir une viscosité élevée de cette phase polyoléfinique et donc par exemple favoriser la dispersion de ces polyoléfines dans la matrice thermoplastique. Cette réticulation peut être aussi utile par exemple pour que la phase polyoléfinique qui apporte une résistance au choc ne pénalise pas la tenue en température et/ou le vieillissement thermique d'un polyamide.

US 5208292 décrit des PET et des PBT modifiés par un mélange de polyoléfines fonctionnalisées qui réagissent entre elles. Il s'agit de la réaction d'un copolymère éthylène / acrylate d'alkyle / méthacrylate de glycidyle avec un copolymère éthylène / acrylate d'alkyle / anhydride maléique. On ajoute aussi un catalyseur pour favoriser cette réaction. Ce catalyseur est par exemple une amine tertiaire ou des phosphines.

EP 400890 décrit des PET et des PBT contenant des copolymères éthylène / acrylate d'alkyle / méthacrylate de glycidyle réticulés par :
- soit des diamines
- soit des copolymères contenant de l'anhydride maléique
- soit des copolymères ayant des fonctions OH
- soit des diacides ou des copolymères éthylène / acide (méth)acrylique
- soit des aminoacides.

EP 382539 décrit des polyamides contenant des copolymères éthylène / acrylate d'alkyle / anhydride maléique réticulés par des diamines ou des produits ayant deux fonctions OH.

Ces réticulations sont parfois insuffisantes ou ne fonctionnent pas de façon reproductibles.

La demanderesse a maintenant découvert que si on ajoute un produit (C) comprenant au moins un acide carboxylique insaturé à un mélange d'un produit (A) comprenant un epoxyde insaturé et d'un produit (B) comprenant un anhydride d'acide carboxylique insaturé, le tout étant incorporé dans un polymère thermoplastique, on obtenait très facilement un copolymère thermoplastique contenant une phase réticulée.

La présente invention concerne une composition thermoplastique comprenant un polymère thermoplastique dans lequel est incorporée une phase réticulée provenant de la réaction :
- d'un produit (A) comprenant un epoxyde insaturé,
- d'un produit (B) comprenant un anhydride d'acide carboxylique insaturé,
- d'un produit (C) comprenant un acide carboxylique insaturé ou d'un acide alphaomegaaminocarboxylique.

A titre d'exemple de polymère thermoplastique on peut citer les polyesters saturés, les polyamides, les alliages de polyesters saturés avec du polycarbonate.

Le terme polyester désigne des polymères qui sont des produits saturés de condensation de glycols et d'acides dicarboxyliques ou de leurs dérivés. De préférence ils comprennent les produits de condensation d'acides dicarboxyliques aromatiques ayant de 8 à 14 atomes de carbone et d'au moins un glycol choisi parmi le groupe constitué du neopentylglycol, du cyclohexanediméthanol et des glycols aliphatiques de formule HO(CH₂)ₙOH dans laquelle n est un entier valant de 2 à 10. Jusqu'à 50 % en mole de l'acide aromatique dicarboxylique peut être remplacé par au moins un autre acide aromatique dicarboxylique ayant de 8 à 14 atomes de carbone, et/ou jusqu'à 20 % en mole peut être remplacé par un acide aliphatique dicarboxylique ayant de 2 à 12 atomes de carbone.

Les polyesters préférés sont le polyéthylène téréphtalate (PET), le poly(1,4-butylène) téréphtalate (PBT), le 1,4-cyclohexylène diméthylène téréphtalate/isophtalate) et d'autres esters dérivés d'acides aromatiques dicarboxyliques tels que l'acide isophtalique, bibenzoïque, naphtalène dicarboxylique, l'acide 4,4'-diphénylenedicarboxylique, l'acide bis(p-carboxyphényl) méthane, l'éthylène bis p-benzoïque acide, l'acide 1-4 tétraméthylène bis(p-oxybenzoïque), l'acide éthylène bis (para oxybenzoïque), l'acide 1,3-triméthylène bis (p-oxybenzoique) et des glycols tels que l'éthylène glycol, le 1,3 triméthylène glycol, le 1,4-tétraméthylèneglycol, le 1,6-hexaméthylène glycol, le 1,3 propylène glycol, le 1,8 octaméthylèneglycol, le 1,10-decaméthylène glycol. Le MFI de ces polyesters, mesuré à 250°C sous 2,16 kg, peut varier de 2 à 100 et avantageusement de 10 à 80.

On entend par polyamide les produits de condensation :
- d'un ou plusieurs aminoacides, tels les acides aminocaproïques, amino-7-heptanoïque, amino-11-undécanoïque et amino-12-dodécanoïque d'un ou plusieurs lactames tels que caprolactame, oenantholactame et lauryllactame ;
- d'un ou plusieurs sels ou mélanges de diamines telles l'hexaméthylènediamine, la dodécaméthylènediamine, la métaxylyènediamine, le bis-p aminocyclohexylméthane et la triméthylhexaméthylène diamine avec des diacides tels que les acides isophtalique, téréphtalique, adipique, azélaïque, subérique, sébacique et dodécanedicarboxylique ;
ou des mélanges de certains de ces monomères ce qui conduit à des copolyamides, par exemple le PA-6/12 par condensation du caprolactame et du lauryllactame.

On peut utiliser des mélanges de polyamide.

A titre d'exemple de produit (A) on peut citer ceux contenant de l'éthylène et un epoxyde insaturé.

Selon une première forme de l'invention (A) est soit un copolymère de l'éthylène et d'un epoxyde insaturé soit une polyoléfine greffée par un epoxyde insaturé.

S'agissant de la polyolefine greffée par un epoxyde insaturé on entend par polyoléfine les polymères comprenant des motifs oléfines tels que par exemple des motifs éthylène, propylène, butène-1, ou tout autre alpha oléfine. A titre d'exemple, on peut citer
- les polyéthylènes tels que les LDPE, HDPE, LLDPE ou VLDPE, le polypropylène, les copolymères éthylène / propylène, les EPR (éthylène / propylène Rubber) ou encore les PE métallocènes (copolymères obtenus par catalyse monosite),
- les copolymères blocs styrène / éthylène-butène / styrène (SEBS), les copolymères blocs styrène / butadiène / styrène (SBS), les copolymères blocs styrène / isoprène / styrène (SIS), les copolymères blocs styrène / éthylène-propylène / styrène, les éthylène / propylène / diène (EPDM) ;
- les copolymères de l'éthylène avec au moins un produit choisi parmi les sels ou les esters d'acides carboxyliques insaturés, ou les esters vinyliques d'acides carboxyliques saturés.

Avantageusement, la polyoléfine est choisie parmi le LLDPE, le VLDPE, le polypropylène, les copolymères éthylène / acétate de vinyle ou les copolymères éthylène / (méth)acrylate d'alkyle. La densité peut être avantageusement comprise entre 0,86 et 0,965, l'indice de fluidité (MFI) peut être compris entre 0,3 et 40 (en g/10 mn à 190°C sous 2,16 kg).

S'agissant des copolymères de l'éthylène et d'un epoxyde insaturé on peut citer par exemple les copolymères de l'éthylène d'un (meth)acrylate d'alkyle et d'un epoxyde insaturé ou les copolymères de l'éthylène, d'un ester vinylique d'acide carboxylique saturé et d'un epoxyde insaturé. La quantité d'epoxyde peut être jusqu'à 15 % en poids du copolymère et la quantité d'éthylène d'au moins 50 % en poids.

Avantageusement (A) est un copolymère de l'éthylène d'un (meth)acrylate d'alkyle et d'un epoxyde insaturé.

De préférence le (meth)acrylate d'alkyle est tel que l'alkyle possède 2 à 10 atomes de carbone.

Le MFI (indice de fluidité à l'état fondu) de (A) peut être par exemple entre 0,1 et 50 (g/10 mn à 190°C sous 2,16 kg).

Des exemples d'acrylate ou methacrylate d'alkyle utilisables sont notamment le methacrylate de méthyle, l'acrylate d'éthyle, l'acrylate de n-butyle, l'acrylate d'isobutyle, l'acrylate de 2-éthylhexyle. Des exemples d'epoxydes insaturés utilisables sont notamment :
- les esters et éthers de glycidyle aliphatiques tels que l'allylglycidyléther, le vinylglycidyléther, le maléate et l'itaconate de glycidyle, l'acrylate et le methacrylate de glycidyle, et
- les esters et éthers de glycidyle alicycliques tels que le 2-cyclohexane-l-glycidyléther, le cyclohexène-4,5-diglycidylcarboxylate, le cyclohexène-4-glycidyl carboxylate, 5-norbornène-2-méthyl-2-glycidyl carboxylate et endocisbicyclo(2,2,1)-5-heptène-2,3-diglycidyl dicarboxylate.

Selon une autre forme de l'invention le produit (A) est un produit ayant deux fonctions epoxyde tel que par exemple le diglycidyl ether du bisphenol A (DGEBA).

A titre d'exemple de produit (B) on peut citer ceux contenant de l'éthylène et un anhydride d'acide carboxylique insaturé.

(B) est soit un copolymère de l'éthylène et d'un anhydride d'acide carboxylique insaturé soit une polyoléfine greffée par un anhydride d'acide carboxylique insaturé.

La polyoléfine peut être choisie parmi les polyoléfines citées plus haut et devant être greffées par un epoxyde insaturé.

Des exemples d'anhydrides d'acide dicarboxylique insaturé utilisables comme constituants de (B) sont notamment l'anhydre maléique, l'anhydride itaconique, l'anhydride citraconique, l'anhydride tétrahydrophtalique.

A titre d'exemples on peut citer les copolymères de l'éthylène d'un (meth)acrylate d'alkyle, d'un anhydride d'acide carboxylique insaturé et les copolymères de l'éthylène, d'un ester vinylique d'acide carboxylique saturé et d'un anhydride d'acide carboxylique insaturé.

La quantité d'anhydre carboxylique insaturé peut être jusqu'à 15 % en poids du copolymère et la quantité d'éthylène d'au moins 50 % en poids.

Avantageusement (B) est un copolymère de l'éthylène d'un (meth)acrylate d'alkyle et d'un anhydride carboxylique insaturé. De préférence le (meth)acrylate d'alkyle est tel que l'alkyle possède 2 à 10 atomes de carbone.

Le (méth)acrylate d'alkyle peut être choisi parmi ceux cités plus haut.

Le MFI de (B) peut être par exemple entre 0,1 et 50 (g/10 mn à 190°C sous 2,16 kg).

Quant au produit (C) comprenant un acide carboxylique insaturé on peut citer à titre d'exemple les produits (B) hydrolysés en tout ou partie. (C) est par exemple un copolymère de l'éthylène et d'un acide carboxylique insaturé et avantageusement un copolymère de l'éthylène et de l'acide (méth)acrylique.

On peut encore citer les copolymères de l'éthylène, d'un (méth)acrylate d'alkyle et de l'acide acrylique.

Ces copolymères ont un MFI entre 0,1 et 50 (g/10 mn à 190°C sous 2,16 kg).

La quantité d'acide peut être jusqu'à 10 % en poids et de préférence 0,5 à 5 %. La quantité de (méth)acrylate est de 5 à 40 % en poids.

(C) peut aussi être choisi parmi les acides alphaomegaaminocarboxyliques tels que par exemple NH₂-(CH₂)₅COOH, NH₂-(CH₂)₁₀COOH et NH₂(CH₂)₁₁-COOH et de préférence l'acide aminoundecanoïque.

La proportion de (A) et (B) nécessaire pour former la phase réticulée est déterminée selon les règles habituelles de l'art par le nombre de fonctions réactives présentes dans (A) et dans (B).

Par exemple dans les phases réticulées contenant (C) choisi parmi les acides alphaomegaaminocarboxyliques si (A) est un copolymère de l'éthylène d'un (meth)acrylate d'alkyle et d'un epoxyde insaturé et (B) un copolymère de l'éthylène, d'un (meth)acrylate d'alkyle et d'un anhydride d'acide carboxylique insaturé les proportions sont telles que le rapport entre les fonctions anhydride et les fonctions epoxy soit voisin de 1.

La quantité d'acide alphaomegaaminocarboxylique est alors de 0,1 à 3 % et de préférence 0,5 à 1,5 % de (A) et (B).

S'agissant de (C) comprenant un acide carboxylique insaturé c'est-à-dire (C) étant choisi par exemple parmi les copolymères éthylène / (méth)acrylate d'alkyle / acide acrylique, la quantité de (C) et (B) peut être choisie de telle sorte que le nombre de fonctions acide et de fonctions anhydride soit au moins égal au nombre de fonctions epoxyde et avantageusement on utilise des produits (B) et (C) tels que (C) représente 20 à 80 % en poids de (B) et de préférence 20 à 50 %.

On ne sortirait pas du cadre de l'invention si on ajoutait en plus de (C) un catalyseur.

Ces catalyseurs sont généralement utilisés pour les réactions entre les epoxy et les anhydrides.

Parmi les composés capables d'accélérer la réaction entre la fonction epoxy présente dans (A) et la fonction anhydride ou acide présente dans (B) on peut citer notamment :
- des amines tertiaires telles que la diméthyllaurylamine, la diméthylstéarylamine, la N-butylmorpholine, la N,N-diméthylcyclohexylamine, la benzyldiméthylamine, la pyridine, la diméthylamino-4-pyridine, le méthyl-1-imidazole, la tétraméthyléthylhydrazine, la N,N-diméthylpipérazine, la N,N,N',N'-tétraméthyl-1,6-hexanediamine, un mélange d'amines tertiaires ayant de 16 à 18 carbones et connues sous l'appellation de diméthylsuifamine
- le 1,4-diazabicyclo[2,2,2]octane (DABCO)
- des phosphines tertiaires telles que la triphénylphosphine
- des alkyldithiocarbamates de zinc.

La quantité de ces catalyseurs est avantageusement de 0,1 à 3 % et de préférence 0,5 à 1 % de (A) + (B) + (C).

La quantité de phase réticulée contenue dans le polymère thermoplastique est fonction des propriétés recherchées de la composition. La phase réticulée peut être de quelques % jusqu'à 80 % en poids de la composition c'est-à-dire de l'ensemble du polymère thermoplastique et de la phase réticulée.

Les compositions de l'invention sont préparées à l'état fondu dans des extrudeuses ou des malaxeurs selon les techniques habituelles des thermoplastiques. Elles sont disponibles sous forme de granulés. Il suffit ensuite de fondre ces granulés par exemple dans une extrudeuse qui alimente par exemple un dispositif d'extrusion soufflage. On peut aussi préparer directement les compositions de l'invention en ajoutant les différents constituants dans une extrudeuse qui alimente le dispositif d'extrusion soufflage.

Dans ce dernier cas l'extrudeuse doit être adaptée aux conditions de mélange et de réaction des précurseurs de la phase réticulée.

Il est donc clair que les compositions de l'invention sont thermoplastiques.

Les compositions de l'invention peuvent comprendre aussi des charges, des ignifugeants, des agents glissants ou antibloquants, des antioxydants et des anti U.V.

S'agissant de polyamides, des compositions avantageuses sont telles que :
- le polymère thermoplastique est choisi parmi le polyamide 6 (PA-6), le polyamide 12 (PA-12), le polyamide 6-6, le copolyamide de 6/12 et le polyamide 11
- le polymère (A) est un copolymère éthylène / (méth)acrylate d'alkyle / (méth)acrylate de glycidyle comprenant 5 à 40 % en poids de (méth)acrylate et 0,1 à 10 % en poids d'epoxyde et ayant un MFI entre 0,1 et 20 (en g/10 mn à 190°C sous 2,16 kg)
- le polymère (B) est un copolymère éthylène / (méth)acrylate d'alkyle / anhydride maléique comprenant 5 à 40 % en poids de (méth)acrylate et 0,1 à 10 % en poids d'anhydride et ayant un MFI entre 0,1 et 20 (en g/10 mn à 190°C sous 2,16 kg)
- le polymère (C) est un copolymère éthylène / (méth)acrylate d'alkyle / acide (méth)acrylique comprenant 5 à 40 % en poids de (méth)acrylate et 0,1 à 10 % en poids d'acide et ayant un MFI entre 0,1 et 20 (en g/10 mn à 190°C sous 2,16 kg).

La quantité de phase réticulée (A) + (B) + (C) peut être (en poids) de 10 à 60 % pour 90 à 40 % de polyamide et de préférence 30 à 45 pour 70 à 55 % de polyamide.

L'avantage des compositions de l'invention est la certitude d'obtenir une phase réticulée dans une large plage de fonctionnement de l'extrudeuse et qu'elles sont facilement granulables.

L'aspect des tubes obtenus par extrusion des compositions de l'invention est excellent.

### Exemples :

On désigne les produits utilisés de la manière suivante :
Amino 11 = acide aminoundecanoïque
PA 1 = Polyamide 6 de MFI compris entre 17 et 20 (sous 235°C / 2,16 kg).
Lotader 2 : Copolymère éthylène / acrylate d'éthyle / anhydride maléique de composition pondérale 70,9 / 27,6 / 1,5 et de MFI 7 (mesuré sous 190°C / 2,16 kg).
Lotader 3 : Copolymère éthylène / acrylate de méthyle / méthacrylate de glycidyle de composition pondérale 64,2 / 28 / 7,8 et de MFI 7 (mesuré sous 190°C / 2,16 kg).
ANTI 51 désigne l'IRGANOX 1098 de CIBA.
ANTI 82 désigne l'HOSTANOX PAR 24 de HOECHST.
XX1275 désigne un accélérateur de réticulation de type dimethylsuifamine (DMS) sous forme de mélange maître MM dans du LOTADER 2.
Lucalène 3110 = Copolymère éthylène / acrylate de butyle / acide acrylique de composition en poids 88/8/4 (BASF). MFI 6 à 8 (190°C / 2,16 kg)
XX1325 : DABCO sous forme de mélange maître dans du LOTADER 2 (80/20).

Les constituants des compositions de l'invention sont introduits sous forme de dry-blend ou par des doseurs indépendants dans la trémie d'une extrudeuse double vis corotative Werner Pfleiderer de diamètre 40 mm, L/D = 40 (9 fourreaux + 4 entretoises soit une longueur totale de 10 fourreaux). Le débit total de l'extrudeuse peut être choisi à 50, 65 et 80 kg/heure.

Les résultats sont reportés sur le tableau 1. Les compositions sont en % poids.

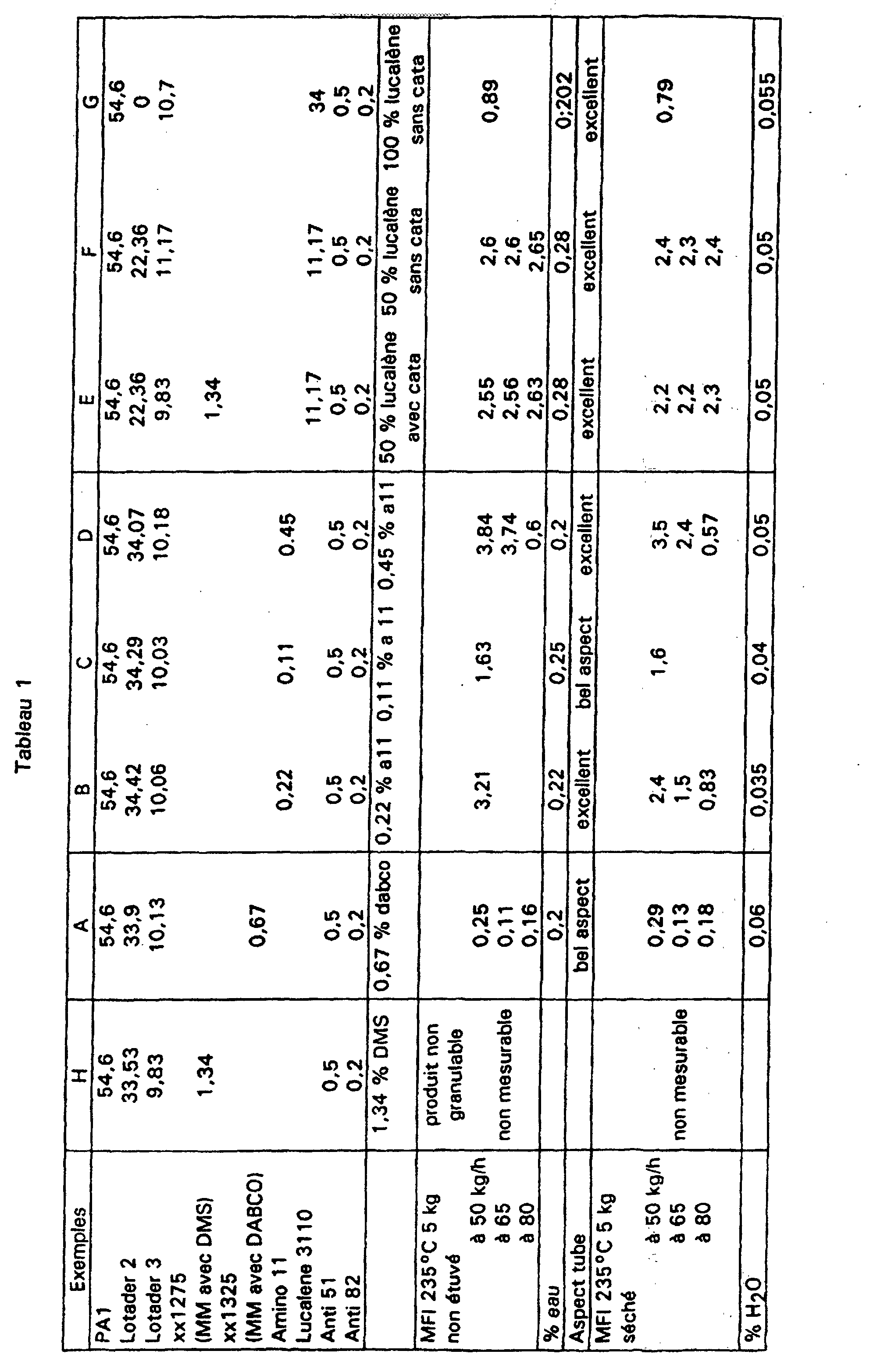

## Revendications

1. Compositions thermoplastiques comprenant un polymère thermoplastique dans lequel est incorporée une phase réticulée provenant de la réaction :
- d'un produit (A) comprenant un epoxyde insaturé
- d'un produit (B) comprenant un anhydride d'acide carboxylique insaturé
- d'un produit (C) comprenant un acide carboxylique insaturé ou d'un acide alphaomegaaminocarboxylique.

2. Compositions de la revendication 1 dans laquelle le produit (A) est un copolymère éthylène / (méth)acrylate d'alkyle / (méth)acrylate de glycidyle.

3. Compositions selon la revendication 1 ou 2 dans laquelle le produit (B) est un copolymère éthylène / (méth)acrylate d'alkyle / anhydride maléique.

4. Compositions selon l'une quelconque des revendications 1 à 3 dans laquelle (C) est un copolymère éthylène / (méth)acrylate d'alkyle / acide (méth)acrylique.

5. Compositions selon l'une quelconque des revendications précédentes dans laquelle le polymère thermoplastique est choisi parmi les polyamides et les polyesters saturés.

## Patentansprüche

1. Thermoplastische Zusammensetzungen, die ein thermoplastisches Polymer enthalten, in das eine vernetzte Phase eingebracht wurde, die durch die Reaktion:
- eines Produktes (A), das ein ungesättigtes Epoxid enthält,
- eines Produktes (B), das ein Anhydrid einer ungesättigten Carbonsäure enthält, und
- eines Produktes (C), das eine ungesättigte Carbonsäure oder eine α,ω-Aminocarbonsäure enthält,
gebildet wird.

2. Zusammensetzungen nach Anspruch 1, wobei das Produkt (A) ein Copolymer Ethylen/Alkyl(meth)acrylat/Glycidyl(meth)acrylat ist.

3. Zusammensetzungen nach Anspruch 1 oder 2, wobei das Produkt (B) ein Copolymer Ethylen/Alkyl(meth)acrylat/Maleinsäureanhydrid ist.

4. Zusammensetzungen nach einem der Ansprüche 1 bis 3, wobei (C) ein Copolymer Ethylen/Alkyl(meth)acrylat/ (Meth)acrylsäure ist.

5. Zusammensetzungen nach einem der vorhergehenden Ansprüche, wobei das thermoplastische Polymer unter den Polyamiden und gesättigten Polyestern ausgewählt ist.

## Claims

1. Thermoplastic compositions comprising a thermoplastic polymer, in which polymer is incorporated a crosslinked phase originating from the reaction:
- of a product (A) comprising an unsaturated epoxide
- of a product (B) comprising an unsaturated carboxylic acid anhydride
- of a product (C) comprising an unsaturated carboxylic acid or of an α,ω-aminocarboxylic acid.

2. Compositions according to Claim 1, in which the product (A) is an ethylene/alkyl (meth)acrylate/glycidyl (meth)acrylate copolymer.

3. Compositions according to Claim 1 or 2, in which the product (B) is an ethylene/alkyl (meth)acrylate/maleic anhydride copolymer.

4. Compositions according to any one of Claims 1 to 3, in which (C) is an ethylene/alkyl (meth)acrylate/(meth)acrylic acid copolymer.

5. Compositions according to any one of the preceding claims, in which the thermoplastic polymer is chosen from polyamides and saturated polyesters.
